# EUROPÄISCHE PATENTSCHRIFT

(11) **EP 2 758 271 B1**
(45) Veröffentlichungstag und Bekanntmachung des Hinweises auf die Patenterteilung: **06.12.2017**
(21) Anmeldenummer: 12766022.3
(22) Anmeldetag: 13.09.2012
(51) Int. Cl.: B60N 2/24, B60N 2/42, B60N 2/427

(54) **MINENSICHERE SITZEINRICHTUNG**
MINE PROTECTION SEAT
SIÈGE ANTI-MINES

(30) Priorität: 21.09.2011 DE 202011105911 U
(43) Veröffentlichungstag der Anmeldung: 30.07.2014
(73) Patentinhaber: Rheinmetall MAN Military Vehicles GmbH, 80995 München (DE)
(72) Erfinder: WEIBER, Andreas, 34127 Kassel (DE)
(74) Vertreter: Horn Kleimann Waitzhofer Patentanwälte PartG mbB
(86) Internationale Anmeldenummer: PCT/EP2012/068013
(87) Internationale Veröffentlichungsnummer: WO 2013/041447

(56) Entgegenhaltungen:
- EP-A2- 2 306 139
- EP-B1- 1 593 542
- WO-A1-2011/130263
- CA-A1- 2 504 928
- DE-A1-102008 028 872
- DE-A1-102010 032 570

## Beschreibung

Die Erfindung beschäftigt sich mit einer minensicheren Sitzeinrichtung sowie einem minensicheren Sitztragwerk, das über zumindest eine Anbindung an eine Fahrzeugstruktur oder Fahrzeugchassis über Führungsrohre oder dergleichen und wenigstens einem Gurt mit Aufreißnaht verfügt.

Aus dem Stand der Technik sind eine große Menge von Sitztragwerken, Sitzanbindungen mittels Gurten etc. bekannt.

So beschreibt die EP 2 208 634 A1 ein Schock absorbierendes Sitzgestell, insbesondere für ein militärisches Fahrzeug, mit einem Fahrzeugsitz, der an einer horizontal angeordneten und in vertikaler Richtung verschiebbaren Sitzträgerkonsole befestigt ist. Um zu erreichen, dass beim Auftreten großer Beschleunigungskräfte, wie sie beispielsweise bei Minenexplosionen auftreten, diese mindestens teilweise durch die Sitzeinrichtung absorbiert werden, wird in einem die Sitzträgerkonsole haltende Konsolenträger ein eine Energie verzerrendes Element derart eingebunden, dass das die Energie verzehrende Element von einer Ruheposition in eine andere Position ausgefahren wird, sodass sich die Sitzhöhe zum Fahrzeugdach bzw. Fahrzeugdecke verändert, der Abstand verlängert wird. Der Konsolenträger ist dabei fest mit dem Fahrzeugdach verbunden.

Ein minensicheres Sitztragwerk beschreibt auch die DE 10 2008 063 804 A1. Dabei handelt es sich um ein Tragwerk zur minensicheren Integration von handelsüblichen Sitzeinrichtungen. Das Tragwerk kann entsprechend der zu erwartenden Minenbelastung starr, mittels Gurten oder über Crashelemente an einem Fahrzeugdach und über Gurte unten, an einem Boden befestigt werden und dient zur Aufnahme eines herkömmlichen Sitzes, der seinerseits über eigene Verstellmöglichkeiten und / oder Funktionsaktuatoren verfügt.

Die EP 0 078 479 A1 offenbart eine Energie absorbierende Sitzvorrichtung, die an einer Seitenwand - hier eines Hubschraubers - befestigt werden kann.

Mit der DE 101 30 632 A1 werden verschiedene teleskopartige Schock absorbierende Varianten für ein Untergestell einer Sitzschale publiziert.

Der in der EP 1 916 148 A1 aufgezeigte Sitz für ein gepanzertes Fahrzeug weist einen Sitzrahmen auf, der mit einer am Fahrzeugdach befestigten Aufhängung verbunden ist, wobei diese Verbindung seitlich erfolgt.

Eine gelenkige Aufhängung eines Aufhängungsgestänges zur Aufnahme eines Sitzbezuges am Fahrzeugdach beschreibt die EP 1 593 542 B1. Der elastische Aufhängungsgurt weist zumindest eine Schlinge auf, die mit einer definierten Reisfestigkeit als energieaufzehrende Sollbruchstelle separat vernäht ist.

Ein weiteres Sitzsystem liegt der DE 10 2008 028 872 A1 nach dem Oberbegriff des Anspruchs 1 zugrunde. Hierbei ist der Sitz über eine Gurtaufhängung insbesondere am Dach des Fahrzeuges aufhängbar. Zum anheben des Sitzes ist der Gurt mittels einer Aufrollvorrichtung aufrollbar.

Weitere mittels Gurte befestigbare Sitzsysteme sind unter anderem der EP 2 103 478 A2, DE 10 2004 009 557 B3, DE 10 2007 006 013 A1, DE 10 2008 005 422 B3, DE 10 2007 019 348 B3, DE 10 2004 062 350 B3, US 3,314,720 A und der WO 2009/121537 A1 sowie WO 2008/086967 A1 entnehmbar. Die Befestigung an einem Sitzgestell zeigt die US 6,378,939 B1.

Die DE 10 2007 022 816 B3 gibt einen Sicherheitssitz mit mittels einer Naht vernähten Haltegurten an. Die Naht ist derart gewählt, dass die Naht ohne einen Abriss eine mindestens gleiche Dehnung wie das Gurtband erfahren kann.

Ein aufreißbares Element, das aufgrund eines Drucks oder einer Schockwelle aufreißt, benennt die DE 60 2005 002 282 T2.

Die Erfindung stellt sich die Aufgabe, ein minensicheres Sitztragwerk aufzuzeigen, das eine Entkopplung von Sitz bzw. dessen Anbindung und Fahrzeugstruktur realisiert sowie die Verringerung der auf die Insassen einwirkenden Energie bewirkt.

Gelöst wird die Aufgabe durch die Merkmale des Patentanspruchs 1. Vorteilhafte Ausgestaltungen sind in den Unteransprüchen aufgezählt.

Der Lösung liegt die Idee zugrunde, neben Führungsrohren, die ihrerseits jedoch nur fahrdynamische und / oder Crash-Lasten, die in horizontaler Ebene wirken, aufnehmen können und / oder müssen, mehrere Haltegurte einzubinden, die mit dem Sitztragwerk verbunden sind. Diese Gurte besitzen mindestens eine Aufreißnaht. Im Falle einer Ansprengung reißen diese Nähte bei Erreichen einer bestimmten Belastung auf und geben einen definierten Weg frei. Dies kann beispielsweise durch eine Schlaufe im Gurt (vernäht mit Aufreißnaht) bewerkstelligt werden. Ist der definierte Weg aufgebraucht, bremst die Gurtdehnung den Aufschlag des Sitzes bzw. des Insassen. Der Gurt besteht aus mehreren unterschiedlich langen Gurten, wobei der kürzeste Gurt mit Aufreißnaht bei Minenansprengungen reißt, während der längere Gurt Sitz und Insassen nach einem definierten Weg abfängt. Die auf die Insassen wirkende Kraft wird dadurch gemindert. Es versteht sich, dass durch die Anzahl der Nähte, die Nahtgeometrie als auch dem Material der Naht - einzeln als auch in Kombination - das Aufreißen bzw. die Aufreißkraft bezüglich einer zulässigen Belastung der Insassen einstellbar ist.

Alternativ kann die Aufreißnaht aber auch durch ein Verkleben, Verschweißen etc. auch in Kombination mit dem Vernähen etc. geschaffen werden. Hierbei wäre dann sicherzustellen, dass das Aufreißen bei einer bestimmten Belastung gewährleistet ist.

Anhand eines einfach dargestellten Ausführungsbeispiels soll das Prinzip kurz erläutert werden. Es zeigt:
- Fig. 1: eine leicht perspektivische Darstellung eines Sitztragwerkes mit Führungsrohren und Haltegurt,
- Fig. 2: eine vergrößerte Darstellung der Anbindung aus Fig. 1,
- Fig. 3: eine Schnittdarstellung im Schnitt B-B aus Fig. 2.

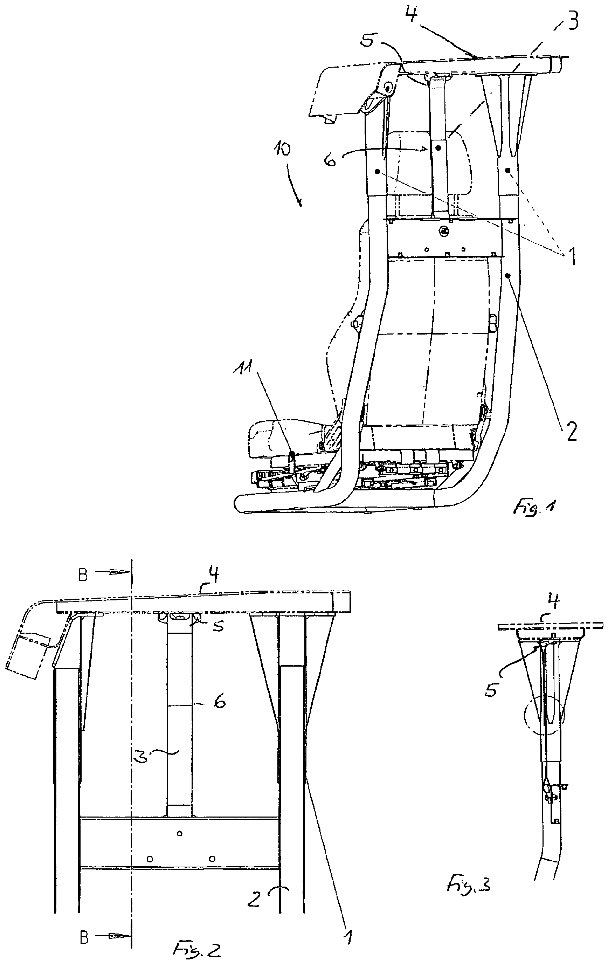

In Fig. 1 ist eine Sitzeinrichtung 10 mit einem Sitztragwerk 2 zur Aufnahme eines Sitzes 11 dargestellt, die in Führungsrohren 1 - hier in zwei - axial verschiebbar gelagert und über diese mit einem Fahrzeugdach 4 eines nicht näher dargestellten Fahrzeuges verbunden ist.

Weitere untere Anbindungen werden durch nicht näher dargestellte Gurte, wie in DE 10 2008 063 804 A1 offenbart. Durch die verschiebbare Lagerung wird die Aufnahme fahrdynamischer Kräfte oder fahrbedingter Lasten ermöglicht. Das Sitztragwerk 2 ist des Weiteren mit wenigstens einem Haltegurt 3 versehen, der bevorzugt nur eine Schlaufe 5 aufweist und wenigstens eine Aufreißnaht 6 besitzt.

Fig. 2 zeigt eine vergrößerte Darstellung der Fahrzeugdachanbindung und Fig. 3 eine Darstellung einer möglichen Befestigung des Haltegurtes 3 am Sitztragwerk 2.

Als Gurtmaterial ist ein reißfestes Material vorgesehen, dass textilen Ursprungs sein kann. Leder, Textil-Leder Kombinationen und dergleichen sind ebenfalls einsetzbar vorzugsweise Polyester.

Für eine bevorzugte Leichtbauweise kann das Sitztragwerk 2 aus GFK (glasfaserverstärkter Kunststoff) oder CFK (kohlenstofffaserverstärkter Kunststoff) aufgebaut bzw. die Struktur aus diesen gewickelt sein.

## Patentansprüche

1. Minensichere Sitzeinrichtung (10), aufweisend ein Sitztragwerk (2) zur Aufnahme eines Sitzes (11), das an einem Fahrzeugdach (4) befestigbar ist, **gekennzeichnet durch** wenigstens ein Führungsrohr (1), in dem das Sitztragwerk (2) axial verschiebbar gelagert und über dieses mit dem Fahrzeugdach (4) verbindbar ist, sowie wenigstens einen Haltegurt (3) mit wenigstens einer Aufreißnaht (6), die im Falle einer Ansprengung bei Erreichen einer bestimmten Belastung aufreißt, wobei der Haltegurt (3) aus mehreren unterschiedlich langen Haltegurten besteht, wobei der kürzeste Haltegurt mit Aufreißnaht bei einer Ansprengung reißt und der längere Haltegurt Sitz und Insassen nach einem definierten Weg abfängt.

2. Minensichere Sitzeinrichtung (10) nach Anspruch 1, **dadurch gekennzeichnet, dass** die Aufreißnaht (6) geklebt, verschweißt und/oder genäht ist.

3. Minensichere Sitzeinrichtung (10) nach einem der Ansprüche 1 oder 2, **dadurch gekennzeichnet, dass** der oder die Haltegurte (3) über eine Schlaufe (5) am Fahrzeugdach (4) befestigt ist/sind.

4. Minensichere Sitzeinrichtung (10) nach einem der Ansprüche 1 bis 3, **dadurch gekennzeichnet, dass** durch die Anzahl der Nähte (6), die Nahtgeometrie und/oder das Material der Naht (6) die Aufreißkraft eingestellt werden kann.

5. Minensichere Sitzeinrichtung (10) nach einem der Ansprüche 1 bis 4, **dadurch gekennzeichnet, dass** das Gurtmaterial ein in sich reißfestes Material ist, das textilen Ursprungs sein kann, aber auch Leder, Nylon-Leder und dergleichen, vorzugsweise Polyester.

6. Minensichere Sitzeinrichtung (10) nach einem der Ansprüche 1 bis 5, **dadurch gekennzeichnet, dass** das Sitztragwerk (2) aus GFK und/oder CFK aufgebaut bzw. die Struktur aus diesen gewickelt ist.

7. Fahrzeug mit einer mit einem Fahrzeugdach (4) verbundenen minensicheren Sitzeinrichtung (10) nach einem der Ansprüche 1 bis 6.

## Claims

1. A mine-proof seat equipment (10) comprising a seat frame (2) for accommodating a seat (11) and being attachable to a vehicle roof (4), **characterized by** the seat frame (2) being axially displaceable in and connectable to a vehicle roof (4) through at least one guiding tube (1), and at least one seat belt (3) having at least one tearable seam (6) that tears apart in case of a blast upon reaching a predetermined load, wherein the seat belt (3) includes a plurality of seat belts each having a different length, wherein the shortest seat belt having the tearable seam tears in case of a blast and the longer seat belt retains the seat and a passenger after a predetermined travel distance.

2. The mine-proof seat equipment (10) according to claim 1,
**characterized in that** the tearable seam (6) is bonded, welded and/or sewed.

3. The mine-proof seat equipment (10) according to one of claims 1 or 2,
**characterized in that** the one or more seat belt (3) is attached to the vehicle roof (4) using a loop (5).

4. The mine-proof seat equipment (10) according to any of claims 1 to 3,
**characterized in that** the tearing force is adjustable by adjusting the number of seams (6), the seam geometry and/or the material of the seam (6).

5. The mine-proof seat equipment (10) according to any of claims 1 to 4,
**characterized in that** the belt material is an intrinsically tear-proof material and may be of textile origin, but also leather, nylon-leather and the like, preferably polyester.

6. The mine-proof seat equipment (10) of any of claims 1 to 5,
**characterized in that** the seat frame (2) is made of GRP and/or CRP and/or the structure is wound therefrom.

7. Vehicle comprising a mine-proof seating equipment (10) according to any of claims 1 to 6 connected to a vehicle roof (4).

## Revendications

1. Dispositif d'assise anti-mine (10) présentant une ossature d'assise (2) pour loger un siège (11), lequel peut être fixé au toit d'un véhicule (4), **caractérisé par** au moins un tube guide (1) dans lequel l'ossature d'assise (2) est montée à coulissement axial et peut être relieé par le biais de celui-ci au toit du véhicule (4) ainsi qu'au moins une ceinture de sécurité (3) présentant au moins une couture déchirable (6) qui en cas de déflagration se déchire dès dépassement d'une sollicitation déterminée, la ceinture de sécurité (3) étant constituée de plusieurs ceintures de sécurité de longueurs différentes, la ceinture de sécurité la plus courte avec couture déchirable se déchirant en cas de déflagration et la ceinture de sécurité plus longue arrêtant siège et occupants selon une course définie.

2. Dispositif d'assise anti-mine (10) selon la revendication 1 **caractérisé en ce que** la couture déchirable (6) est collée, soudée et/ou cousue.

3. Dispositif d'assise anti-mine (10) selon l'une des revendications 1 ou 2, **caractérisé en ce que** la ou les ceintures de sécurité (3) est/sont fixées par un passant de ceinture (5) au toit du véhicule (4).

4. Dispositif d'assise anti-mine (10) selon l'une des revendications 1 à 3, **caractérisé en ce qu'**il est possible de régler la force de déchirure grâce au nombre de coutures (6), à la géométrie des coutures et/ou à la matière de la couture (6).

5. Dispositif d'assise anti-mine (10) selon l'une des revendications 1 à 4, **caractérisé en ce que** la matière de ceinture est en soi une matière anti-déchirure, laquelle peut être d'origine textile, mais également être du cuir, du cuir-Nylon et similaires, de préférence du polyester.

6. Dispositif d'assise anti-mine (10) selon l'une des revendications 1 à 5, **caractérisé en ce que** l'ossature d'assise (2) est composée de matière plastique renforcée de fibres de verre et/ou de matière plastique renforcée de fibres de carbone ou la structure est enroulée de ceux-ci.

7. Véhicule comportant un dispositif d'assise anti-mine (10) relié au toit d'un véhicule (4) selon l'une des revendications 1 à 6.
